# EUROPÄISCHE PATENTSCHRIFT

(11) **EP 3 486 530 B1**
(45) Veröffentlichungstag und Bekanntmachung des Hinweises auf die Patenterteilung: **22.04.2020**
(21) Anmeldenummer: 17202336.8
(22) Anmeldetag: 17.11.2017
(51) Int. Cl.: F16H 57/02, F16H 1/30

(54) **PLANETENTRÄGER**
PLANETARY CARRIER
PORTE-SATELLITES

(43) Veröffentlichungstag der Anmeldung: 22.05.2019
(73) Patentinhaber: IMS Gear SE & Co. KGaA, 78166 Donaueschingen (DE)
(72) Erfinder: Albert, Simon, 79848 Bonndorf im Schwarzwald (DE)
(74) Vertreter: Westphal, Mussgnug & Partner Patentanwälte mbB

(56) Entgegenhaltungen:
- EP-A1- 2 166 252
- US-A- 1 276 855
- US-A- 5 387 162

## Beschreibung

Die vorliegende Erfindung betrifft einen Planetenträger zum Lagern zumindest eines Planetenrads in einem Schraubrad-Planetengetriebe für eine Verstelleinrichtung zum Verstellen zweier zueinander verstellbarer Bauteile. Weiterhin betrifft die Erfindung ein Schraubrad-Planetengetriebe, welches einen derartigen Planetenträger umfasst. Darüber hinaus betrifft die Erfindung eine Motor-Getriebeanordnung mit einem solchen Schraubrad-Planetengetriebe.

Planetengetriebe finden in vielen Antriebssträngen Verwendung, da sie große Über- oder Untersetzungsverhältnisse auf kleinem Raum ermöglichen. Ein Anwendungsbereich stellen Hilfsantriebe für Kraftfahrzeuge dar, mit denen zwei zueinander verstellbare Fahrzeugteile relativ zueinander bewegt werden können. Ein Beispiel für derartige Hilfsantriebe sind elektromechanische Aktuatoranordnungen, die unter anderem zum Betätigen von Parkbremsen von Kraftfahrzeugen eingesetzt werden. Andere Hilfsantriebe werden beispielsweise für Sitzlängsverstellungen, Heccklappenverstellungen, Fensterheber und Schiebedachverstellungen eingesetzt. Da in Kraftfahrzeugen der zur Verfügung stehende Raum knapp bemessen ist, können Planetengetriebe ihre Vorteile hier besonders gut ausspielen.

Ein anderer Anwendungsbereich sind beispielsweise Antriebe für Fenster und Rollläden von Gebäuden, die im Zuge der zunehmenden Digitalisierung von Gebäuden, welche mit dem Begriff "Smart Home" bezeichnet wird, eine immer wichtigere Rolle spielen.

Bei Hilfsantrieben werden nahezu ausnahmslos Elektromotoren als Antriebsquelle eingesetzt. Die typischerweise verwendeten Elektromotoren drehen häufig mit einer vergleichsweise hohen Drehzahl, so dass hohe Untersetzungen erforderlich sind, um die Bauteile mit der gewünschten, vergleichsweise langsamen Bewegung relativ zueinander verstellen zu können. Zudem sind die vom Elektromotor abgegebenen Drehmomente häufig nicht ausreichend, um die Bauteile bewegen zu können, so dass auch aus diesem Grund Untersetzungen notwendig sind.

Auch wenn bekannte Planetengetriebe hohe Über- oder Untersetzungsverhältnisse bereitstellen können, reichen diese in einigen Anwendungsbereichen nicht aus, so dass man gezwungen ist, zwei- oder mehrstufige Getriebe zu verwenden, in welchen zwei oder mehrere Planetengetriebe im Antriebsstrang angeordnet sind. Hierdurch wird die Komplexität des Antriebsstrangs erhöht, wodurch im Vergleich zu einem einstufigen Planetengetriebe die Fertigung verkompliziert, die Ausfallwahrscheinlichkeit erhöht und der Bauraum vergrößert werden.

Eine Möglichkeit, die Über- oder Untersetzungsverhältnisse von Planetengetrieben zu steigern, liegt in der Verwendung von sogenannten "Koaxial-Getrieben". Die Zahnräder von üblichen Planetengetrieben sind als Stirnräder ausgebildet. Bei Koaxial-Getrieben ist das Sonnenrad als eine Schnecke und die Planetenräder mit einer entsprechend angepassten Planetenradverzahnung ausgebildet. Das Hohlrad weist eine der Planetenradverzahnung entsprechende Innenverzahnung auf.

Ein besonders auffälliges Merkmal derartiger Koaxial-Getriebe ist die Tatsache, dass die Planetenradachsen nicht parallel zur Drehachse der Schnecke, sondern windschief hierzu verlaufen. Zumindest diesbezüglich ist der Begriff "Koaxial-Getriebe" nicht zutreffend, so dass derartige Getriebe im Folgenden als Schnecken-Planetengetriebe bezeichnet werden. Derartige Schnecken-Planetengetriebe sind beispielsweise in der WO 2015/036328 A1 und der EP 2 166 252 A1 offenbart. Neben den hohen Über- oder Untersetzungsverhältnissen stellen derartige Schnecken-Planetengetriebe ein ruhiges Laufverhalten bei einer geringen Geräuschentwicklung bereit.

Zum drehbaren Lagern der Planetenräder können die Planetenträger mit dem Planetenträger verbundene Planetenradachsen aufweisen, wie es beispielsweise aus der WO 2014/095966 A1 bekannt ist. Auch können die Planetenradachsen einteilig mit dem Planetenträger ausgebildet sein, wie beispielsweise in der EP 2 860 338 A2 beschrieben.

Außerdem offenbart die US 1 276 855A einen Planetenträger zum Lagern zumindest eines Schraubrad-Planetenrads in einem Schraubrad-Planetengetriebe für eine Verstelleinrichtung zum Verstellen zweier zueinander verstellbarer Bauteile, wobei das Schraubrad-Planetenrad eine Planetenradachse aufweist, welche einen über das Schraubrad-Planetenrad überstehenden ersten Achsenabschnitt und einen über das Schraubrad-Planetenrad überstehenden zweiten Achsenabschnitt umfasst, und der Planetenträger aufweist einen rohrförmigen Grundkörper, der eine Planetenträgerachse definiert, zumindest einen im Grundkörper angeordneten und diesen durchdringenden Durchbruch, einen vom Durchbruch ausgehenden ersten Lagerungsabschnitt, einen vom Durchbruch ausgehenden zweiten Lagerungsabschnitt, wobei der erste und der zweite Lagerungsabschnitt zur Aufnahme des ersten und des zweiten Achsenabschnitts ausgebildet und so angeordnet sind, dass die Planetenradachse windschief zu der Planetenträgerachse verläuft, wenn die Achsenabschnitte in den Lagerungsabschnitten aufgenommen sind.

Derartige Konzepte zum Lagern der Planetenräder eignen sich nicht, wenn die Planetenradachsen windschief zur Planetenträgerachse verlaufen sollen. Insbesondere stellt sich die Bereitstellung einer exakt ausgerichteten Planetenradachse als schwierig und aufwendig dar.

Aufgabe einer Ausführungsform der vorliegenden Erfindung ist es daher, einen Planetenträger anzugeben, der einfach zu fertigen ist und bei dem sich die Planetenradachsen exakt ausrichten und montieren lassen. Des Weiteren liegt einer Ausgestaltung der vorliegenden Erfindung die Aufgabe zugrunde, ein Planetengetriebe zu schaffen, welches einfach zu fertigen ist und bei dem sich die Planetenradachsen exakt ausrichten und montieren lassen. Darüber hinaus liegt einer Ausbildung der Erfindung die Aufgabe zugrunde, ein Schraubrad-Planetengetriebe für eine Verstelleinrichtung zum Verstellen zweier zueinander verstellbarer Bauteile sowie eine Motor-Getriebeanordnung zu schaffen, welche ein derartiges Planetengetriebe umfasst.

Diese Aufgabe wird mit den in den Ansprüchen 1, 13 und 14 angegebenen Merkmalen gelöst. Vorteilhafte Ausführungsformen sind Gegenstand der Unteransprüche.

Eine Ausführungsform der Erfindung betrifft einen Planetenträger zum Lagern zumindest eines Schraubrad-Planetenrads in einem Schraubrad-Planetengetriebe für eine Verstelleinrichtung zum Verstellen zweier zueinander verstellbarer Bauteile, wobei das Schraubrad-Planetenrad eine Planetenradachse umfasst, welche einen über das Schraubrad-Planetenrad überstehenden ersten Achsenabschnitt und einen über das Schraubrad-Planetenrad überstehenden zweiten Achsenabschnitt umfasst. Der Planetenträger weist vorschlagsgemäß einen rohrförmigen Grundkörper, der eine Planetenträgerachse definiert, zumindest einen im Grundkörper angeordneten und diesen durchdringenden Durchbruch, einen vom Durchbruch ausgehenden ersten Lagerungsabschnitt und einen vom Durchbruch ausgehenden zweiten Lagerungsabschnitt auf. Der erste und der zweite Lagerungsabschnitt sind zur drehbaren Aufnahme des ersten und des zweiten Achsenabschnitts ausgebildet und so angeordnet, dass die Planetenradachse windschief zu der Planetenträgerachse verläuft, wenn die Achsenabschnitte in den Lagerungsabschnitten aufgenommen sind. Ferner umfasst der Planetenträger ein mit dem Grundkörper verbundenes erstes Fixiermittel zum Fixieren des ersten Achsenabschnitts im Grundkörper.

Die vorliegende Erfindung bezieht zwar primär auf Schraubrad-Planetengetriebe, ist aber ohne jede Einschränkung auf Schnecken-Planetengetriebe anwendbar, wie sie in der WO 2015/036328 A1 und der EP 2 166 252 A1 offenbart sind. Schraubrad-Planetengetriebe und Schnecken-Planetengetrieben weisen große Ähnlichkeiten auf, unterscheiden sich aber hauptsächlich in folgendem Punkt: Während bei Schraubrad-Planetengetrieben am Schraubrad ein punktförmiger Kontakt mit den Schraubrad-Planetengetrieben vorliegt, der bei Belastung zu einer sogenannten Druckellipse wird, liegt bei einem Schnecken-Planetengetriebe aufgrund der globoiden Form des Verzahnungsabschnitts der Schnecke und den Planetenrädern eine Linienberührung vor.

Der rohrförmige Grundkörper des Planetenträgers umschließt einen Innenraum, in welchem im montierten Zustand des Planetengetriebes das Sonnenrad, bei Schraubrad-Planetengetrieben das Schraubrad, angeordnet ist. Der den Grundkörper durchdringende Durchbruch ermöglicht den Eingriff der Planetenräder mit dem Schraubrad. Folglich sind die Planetenräder so im Planetenträger gelagert, dass sie durch den Durchbruch teilweise in den Innenraum hineinragen.

Die Lagerungsabschnitte sind so ausgestaltet, dass sie zumindest eine teilweise radiale Lagerung des Planetenrads im Grundkörper bewirken. Je nach Ausgestaltung kann das Fixiermittel eine weitere radiale und/oder axiale Lagerung des Planetenrad bereitstellen. Das erste Fixiermittel wird nicht vom Grundkörper gebildet, sondern ist ein separates Bauteil, das während der Montage des Planetenträgers mit dem Grundkörper verbunden wird. Hierdurch können die Lagerungsabschnitte so ausgestaltet sein, dass sie während der Montage gut zugänglich sind, so dass die Planetenradachse ohne großen Aufwand in die Lagerungsabschnitte eingebracht werden kann. Anschließend wird das erste Fixiermittel mit dem Grundkörper verbunden, um die Lagerung der Planetenradachse zu vervollständigen.

Die mit der Verstelleinrichtung zueinander verstellbaren Bauteile können Fahrzeugteile wie Fahrzeugsitze, Heckklappen, Fahrzeugfenster oder Schiebedächer sein. Die Bauteile können aber auch Fenster, Jalousien oder Rollläden von Gebäuden oder Schiffen sein. Die akustischen Eigenschaften der mit dem vorschlagsgemäßen Planetenträger ausgerüsteten Verstelleinrichtung unterscheiden sich deutlich von bekannten Verstelleinrichtungen, so dass eine geringere Geräuschentwicklung erreicht werden kann.

Nach Maßgabe einer weiteren Ausführungsform umfasst der Planetenträger ein mit dem Grundkörper zweites Fixiermittel zum Fixieren des zweiten Achsenabschnitts im Grundkörper. Es kann ausreichen, nur den ersten Achsenabschnitt mit dem ersten Fixiermittel im oder am Grundkörper zu fixieren. Je nach Anwendung kann es jedoch möglich sein, auch den zweiten Achsenabschnitt mit einem weiteren, nämlich dem zweiten Fixiermittel im oder am Grundkörper zu fixieren, beispielsweise, um höhere Drehmomente zu übertragen. Das erste und das zweite Fixiermittel können baugleich ausgeführt werden, so dass der Mehraufwand zum Fixieren des zweiten Achsenabschnitts gering gehalten wird.

In einer weitergebildeten Ausführungsform kann der Grundkörper eine äußere Oberfläche aufweisen und der erste Lagerungsabschnitt und/oder der zweite Lagerungsabschnitt als eine von der äußeren Oberfläche ausgehende rinnenförmige Vertiefung ausgebildet sein. Dadurch, dass der erste und/oder der zweite Lagerungsabschnitt von der äußeren Oberfläche ausgehen, sind sie radial nach außen offen und damit gut zugänglich, so dass die Montage des Planetenträgers vereinfacht wird.

Eine fortgebildete Ausführungsform ist dadurch gekennzeichnet, dass die rinnenförmige Vertiefung zumindest eine Begrenzungsfläche zum Begrenzen der axialen Bewegbarkeit des Planetenrads aufweist. Wie eingangs erwähnt, verlaufen die Planetenradachsen bei Schaubrad-Planetengetrieben windschief zur Planetenträgerachse. Hierdurch wirken im Gegensatz zu herkömmlichen Planetengetrieben mit Geradverzahnung im Betrieb auch Kräfte entlang der Planetenradachsen, wodurch die Planetenräder entlang der Planetenradachsen wandern, so dass eine axiale Lagerung notwendig ist. Dadurch, dass die rinnenförmige Vertiefung eine Begrenzungsfläche aufweist, mit welcher die axiale Bewegbarkeit des Planentenrads entlang der Planentenradachse begrenzt wird, sind keine weiteren Maßnahmen zum axialen Lagern des Planetenrads notwendig, wodurch die Montage und der Aufbau des vorschlagsgemäßen Planetenträgers einfach gehalten werden.

Bei einer weitergebildeten Ausführungsform können das erste Fixiermittel und/oder das zweite Fixiermittel jeweils zumindest einen Vorsprung aufweisen, der die rinnenförmige Vertiefung zumindest teilweise überdeckt. Wie erwähnt, sind die rinnenförmigen Vertiefungen radial nach außen offen. Hierdurch kann es passieren, dass die Planetenräder insbesondere während der Montage und bevor sie in Eingriff mit einer Innenverzahnung eines Innenschraubrads des Schraubrad-Planetengetriebes gebracht werden, aus dem Planetenträger herausfallen können. Dadurch, dass das erste Fixiermittel und/oder das zweite Fixiermittel die rinnenförmige Vertiefung mit ihrem Vorsprung zumindest teilweise überdecken, bewirken sie eine Begrenzung der radialen Bewegbarkeit der Planentenradachsen radial nach außen, so dass ein Herausfallen der Planetenräder verhindert wird.

Gemäß einer fortentwickelten Ausführungsform bildet der Vorsprung eine Beschränkungsfläche zum Begrenzen der axialen Bewegbarkeit des Planetenrads. In dieser Ausführungsform reicht der Vorsprung bis fast an das Planetenrad heran, so dass ein kleiner Spalt zwischen dem Vorsprung und dem Planetenrad verbleibt. Für den Fall, dass sich das Planetenrad axial zum Vorsprung hin bewegen sollte, kommt es ab einem bestimmten Punkt mit dem Vorsprung in Kontakt, so dass die axiale Bewegbarkeit vom Vorsprung begrenzt wird. Um einen möglichst gleichmäßigen Kontakt zwischen dem Planetenrad und dem Vorsprung zu erhalten, bildet der Vorsprung eine Beschränkungsfläche. Zusätzlich oder alternativ zur Begrenzungsfläche, die von den Lagerungsabschnitten gebildet wird, wird eine weitere Begrenzung der axiale Bewegbarkeit des Planetenrads und folglich eine axiale Lagerung bereitgestellt. Für den Fall, dass der Planetenträger sowohl die Begrenzungsflächen als auch die Beschränkungsflächen aufweist, wird eine besonders materialschonende axiale Lagerung bereitgestellt.

Bei einer weiteren Ausführungsform können der erste Lagerungsabschnitt und/oder der zweite Lagerungsabschnitt von einer von der ersten Stirnfläche ausgehenden Bohrung gebildet werden. Bei eine Bohrung ist die Planetenradachse vollumfänglich vom Material des Grundkörpers umschlossen, so dass der Grundkörper eine optimale Flächenpressung und einen maximalen radialen Traganteil bereitstellt und somit das Planetenrad radial besonders gut gelagert ist. Wenn die Bohrung als Sacklochbohrung ausgeführt wird, bewirkt der Grund der Sacklochbohrung die Begrenzung der axialen Bewegbarkeit des Planetenrads in eine axiale Richtung. Das erste Fixiermittel dient in diesem Fall zur Begrenzung der axialen Bewegbarkeit in die entgegengesetzte axiale Bewegbarkeit. Ein zweites Fixiermittel wird in diesem Fall nicht benötigt.
In einer weiteren Ausführungsform weist die Stirnfläche einen zurückversetzten Abschnitt auf, von dem die Bohrung ausgeht, wobei das erste Fixiermittel einen Vorsprung aufweist, der in den zurückversetzten Abschnitt eingreift. Der zurückversetzte Abschnitt wirkt als eine Ausnehmung, in welche der Vorsprung klauenartig eingreift. Bezüglich der Rotation wird ein Formschluss erzeugt, so dass sich das erste Fixiermittel drehfest am Grundkörper abstützen kann. Die Verbindung des ersten Fixiermittels ist daher nur axial belastet und nicht auf Torsion, wodurch sie kleiner dimensioniert und günstiger gefertigt werden kann.

Eine weitergebildete Ausführungsform zeichnet sich dadurch aus, dass der erste Achsenabschnitt eine Anlagefläche und das erste Fixiermittel eine Anlagegegenfläche bilden, welche zumindest abschnittsweise korrespondierend zueinander verlaufen. Diese Ausführungsform bezieht sich auf den Fall, dass das erste Fixiermittel der Begrenzung der axialen Bewegbarkeit des Planetenrads dient. Der erste Achsenabschnitt kommt bei einem entsprechenden Wandern des Planetenrads entlang der Planetenradachse mit dem ersten Fixiermittel in Anlage. Aufgrund der Drehung der Planetenradachse entsteht hier eine Verschleißfläche. Um den Verschleiß so weit wie möglich zu verringern, wird eine großflächige Anlage dadurch erreicht, dass die Anlagefläche des ersten Achsenabschnitts und die Anlagegegenfläche des ersten Fixiermittels zumindest abschnittsweise korrespondierend zueinander verlaufen. Unter einem korrespondierenden Verlauf ist zu verstehen, dass beispielsweise dann, wenn die Anlagefläche eben ist, auch die Anlagegegenfläche ebenfalls eben ist und parallel zur Anlagefläche verläuft. Wenn die Anlagefläche eine Wölbung aufweist, weist die Anlagegegenfläche eine entsprechende Wölbung auf. Die Anlagefläche wird hierdurch vergrößert und verschleißfördernde Punkt- oder Linienberührungen vermieden.

Gemäß einer weitergebildeten Ausführungsform weisen der Grundkörper und das erste Fixiermittel eine Einrastkontur zum formschlüssigen Verbinden des ersten Fixiermittels am Grundkörper auf. Hierdurch ist es möglich, das erste Fixiermittel durch Aufpressen auf den Grundkörper mit diesem zu verbinden, was eine beispielsweise im Vergleich zum Schweißen einfache Weise ist, das Fixiermittel am Grundkörper zu befestigen. Die Einrastkontur umfasst dabei Hinterschneidungen beispielsweise am Grundkörper, die nach dem Aufpressen von elastischen Abschnitten des ersten Fixiermittels hintergriffen werden.

Bei einer weiteren Ausführungsform kann das Planetenrad eine Planetenradverzahnung mit einer Balligkeit aufweisen. Insbesondere bei Koaxial-Getrieben stellt die Balligkeit einen besonders gleichmäßigen Eingriff mit dem Sonnenrad bereit, wodurch sich eine gute Laufruhe und eine geringe Geräuschentwicklung realisieren lassen.

Eine weitergebildete Ausführungsform zeichnet sich dadurch aus, dass das Planetenrad eine Planetenradverzahnung mit einer Profilüberdeckung aufweist. Auch die Profilüberdeckung trägt zu einer guten Laufruhe und einer geringen Geräuschentwicklung bei.

Nach Maßgabe einer weiteren Ausführungsform besteht der Planetenträger aus Kunststoff oder umfasst Kunststoff. Mit Kunststoff lässt sich der Planetenträger insbesondere gegenüber einem Planetenträger aus Metall besonders leicht fertigen, was zu einer Gewichtsersparnis beispielsweise im Fahrzeug führt.

Eine weitere Ausführungsform zeichnet sich dadurch aus, dass der Planetenträger spritzgegossen ist. Der vorschlagsgemäße Planetenträger lässt sich im Spritzgussverfahren in großer Stückzahl kostengünstig herstellen. Insbesondere dann, wenn die Lagerungsabschnitte radial nach außen offen sind, lassen sie sich radial gut entformen, weshalb sich der vorschlagsgemäße Planetenträger besonders für die Fertigung im Spritzgussverfahren eignet.

Eine Ausgestaltung der Erfindung betrifft ein Schraubrad-Planetengetriebe insbesondere für eine Verstelleinrichtung zum Verstellen zweier zueinander verstellbarer Bauteile, umfassend einen Planetenträger nach einem der vorherigen Ausführungsformen, der eine Planetenträgerachse definiert, zumindest ein Schraubrad-Planetenrad, welches im Planetenträger um eine Planetenradachse drehbar gelagert ist und eine Planetenradverzahnung aufweist, wobei die Planetenradachse windschief zur Planetenträgerachse verläuft, eine Schraubradwelle, welche um die Planetenträgerachse drehbar gelagert ist, und eine Schraubradverzahnung aufweist, die mit der Planetenradverzahnung in Eingriff steht, und ein Innenschraubrad mit einer Innenverzahnung, welche mit der Planetenradverzahnung in Eingriff steht.

Weiterhin betrifft eine Umsetzung der Erfindung eine Motor-Getriebeanordnung insbesondere für eine Verstelleinrichtung zum Verstellen zweier zueinander verstellbarer Bauteile, umfassend einen Elektromotor und ein Schraubrad-Planetengetriebe nach der zuvor beschriebenen Ausgestaltung, wobei der Elektromotor eine Motorwelle aufweist, welche drehfest mit der Schraubradwelle verbunden ist.

Die technischen Effekte und Vorteile, die sich mit dem vorschlagsgemäßen Schraubrad-Planetengetriebe und der vorschlagsgemäßen Motor-Getriebeanordnung erreichen lassen, entsprechen denjenigen, die für den vorliegenden Planetenträger erörtert worden sind. Zusammenfassend sei darauf hingewiesen, dass sich insbesondere die Montage des Planetengetriebes und der Motor-Getriebeanordnung aufgrund der vorschlagsgemäßen Gestaltung des Planetenträgers vereinfachen lässt. Insbesondere lassen sich Schraubrad-Planetengetriebe, bei denen die Planetenradachse windschief zur Planetenträgerachse verläuft, auf einfache Weise fertigen.

Eine weitere Ausbildung zeichnet sich dadurch aus, dass das Innenschraubrad drehfest mit dem Elektromotor verbunden ist. Im Allgemeinen ist es einfacher, das Innenschraubrad drehfest am Elektromotor zu befestigen als das Innenschraubrad zwar axial fixiert, aber drehbar mit dem Elektromotor zu verbinden. Zudem weist die Motor-Getriebeanordnung außen keine drehbaren Teile auf, da das Innenschraubrad den sich drehenden Planetenträger umschließt, wodurch sich die Sicherheit im Betrieb der Motor-Getriebeanordnung erhöhen lässt.

Zudem betrifft die Erfindung die Verwendung eines vorschlagsgemäßen Planetenträgers in Verstelleinrichtungen in Fahrzeugen zum Verstellen zweier zueinander verstellbarer Fahrzeugteile.

Beispielhafte Ausführungsformen der Erfindung werden im Folgenden unter Bezugnahme auf die beigefügten Zeichnungen näher erläutert. Es zeigen
- Figuren 1a - 1c: ein erstes Ausführungsbeispiel eines erfindungsgemäßen Planetenträgers in verschiedenen Montagezuständen,
- Figuren 2a - 2c: ein zweites Ausführungsbeispiel eines erfindungsgemäßen Planetenträgers in verschiedenen Montagezuständen,
- Figuren 3a - 3c: ein drittes Ausführungsbeispiel eines erfindungsgemäßen Planetenträgers in verschiedenen Montagezuständen,
- Figuren 4a - 4c: das dritte Ausführungsbeispiel eines erfindungsgemäßen Planetenträgers in verschiedenen Montagezuständen, und
- Figur 5: eine Teilschnittdarstellung einer Motor-Getriebeanordnung mit einem der in den Figuren 1 bis 4 dargestellten Planetenträgern.

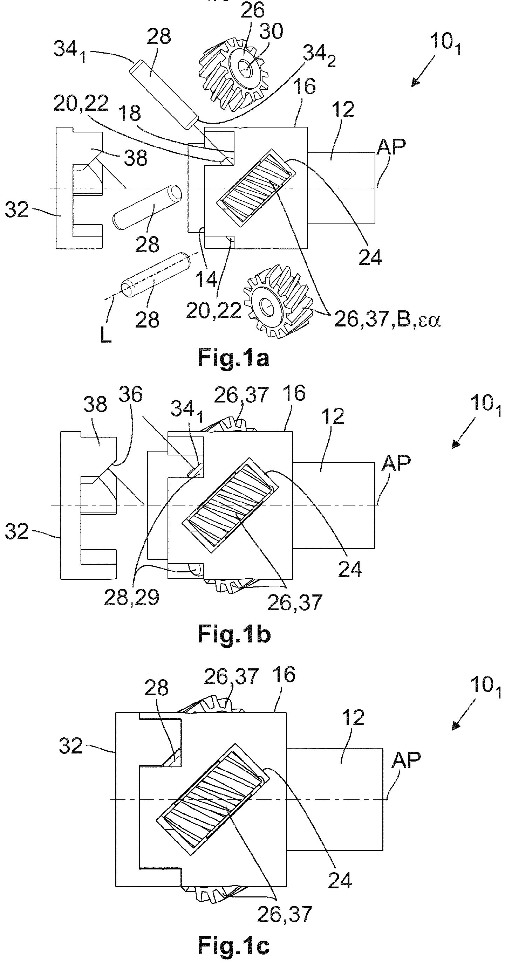

In den Figuren 1a bis 1c ist ein erstes Ausführungsbeispiel eines erfindungsgemäßen Planetenträgers 10₁ in verschiedenen Montagezuständen jeweils anhand einer Draufsicht gezeigt. Figur 1a zeigt einen weitgehend demontierten Zustand, in Figur 1b ist der Planetenträger 10₁ teilweise und in Figur 1c ist der Planetenträger 10₁ vollständig montiert dargestellt.

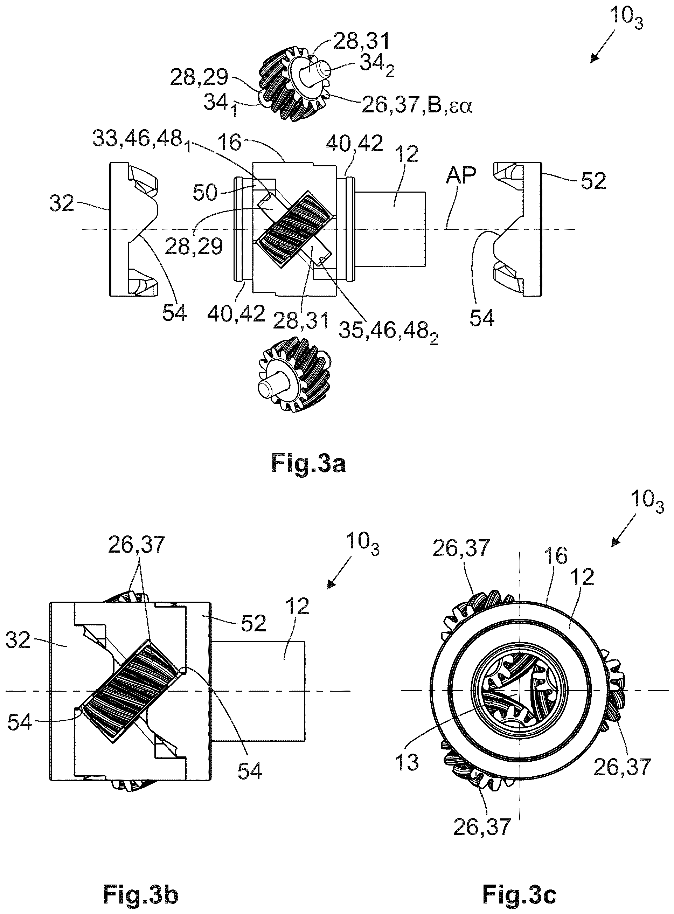

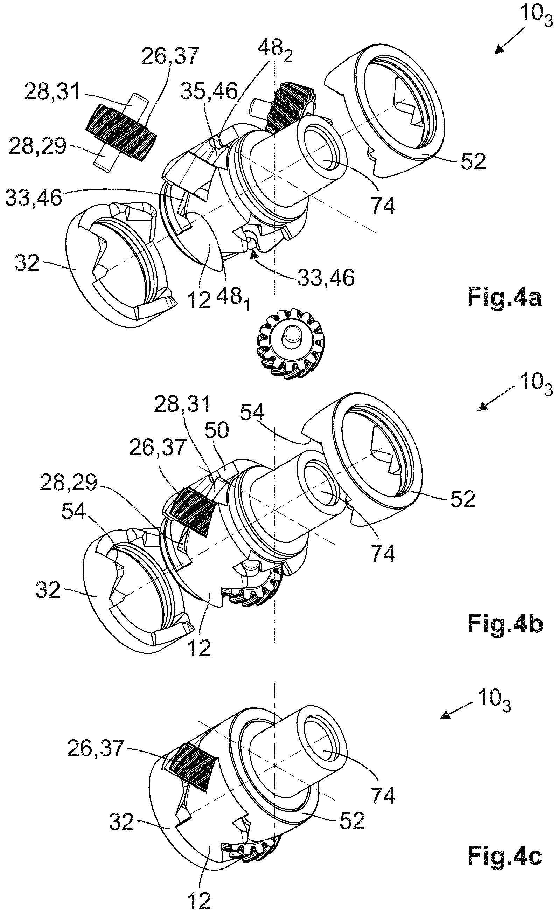

Der Planetenträger 10₁ weist einen rohrförmigen Grundkörper 12 auf, der einen Innenraum 13 umschließt und eine Stirnfläche 14 und eine äußere Oberfläche 16 bildet. Der Grundkörper 12 definiert eine Planetenträgerachse AP. Die Stirnfläche 14 bildet insgesamt drei zurückversetzte Abschnitte 18, von denen sich jeweils eine Bohrung 20, die im ersten Ausführungsbeispiel als Sacklochbohrungen 22 ausgeführt sind, in den Grundkörper 12 erstrecken. Die Sacklochbohrungen 22 verlaufen windschief zur Planetenträgerachse AP. Weiterhin umfasst der Planetenträger 10₁ insgesamt drei Durchbrüche 24, die im Grundkörper 12 angeordnet sind und welche den Grundkörper 12 ausgehend von der äußeren Oberfläche 16 durchdringen. Die Bohrungen 20 sind so ausgeführt, dass sie jeweils einen vom Durchbruch 24 ausgehenden ersten Lagerungsabschnitt 33 und jeweils einen vom Durchbruch 24 ausgehenden zweiten Lagerungsabschnitt 35 bilden (vgl. Figuren 3a und 4a). Die beiden Lagerungsabschnitte 33, 35 dienen zur Lagerung jeweils eines Schraubrad-Planetenrads 26. Das Schraubrad-Planetenrad 26 weist eine Planetenradachse 28 mit einer Längsachse L auf, wobei die Planetenradachse 28 einen über das Schraubrad-Planetenrad 26 überstehenden ersten Achsenabschnitt 29 und einen über das Schraubrad-Planetenrad 26 überstehenden zweiten Achsenabschnitt 31 umfasst (Figur 3a). Die Planetenradachse 28 kann durch eine Durchgangsbohrung 30 des Schraubrad-Planetenrads 26 durchgeführt werden. Darüber hinaus weist das Schraubrad-Planetenrad 26 eine Planetenradverzahnung 37 mit einer Balligkeit B und einer Profilüberdeckung εα auf.

Der erste Achsenabschnitt 29 kann drehbar im ersten Lagerungsabschnitt 33 und der zweite Achsenabschnitt 31 drehbar im zweiten Lagerungsabschnitt 35 aufgenommen werden.

Darüber hinaus umfasst der Planetenträger 10₁ ein erstes Fixiermittel 32, welches am Grundkörper 12 befestigt werden kann. Der erste Achsenabschnitt 29 bildet eine erste Anlagefläche 34₁ und der zweite Achsenabschnitt 31 eine zweite Anlagefläche 34₂, welche jeweils senkrecht zu der Längsachse L der Planetenradachse 28 verlaufen. Das erste Fixiermittel 32 bildet eine Anlagegegenfläche 36, die im montierten Zustand korrespondierend zur Anlagefläche 34₁ verläuft. Die Anlagegegenfläche 36 ist auf einem Vorsprung 38 des ersten Fixiermittels 32 angeordnet.
Der Planetenträger 10₁ wird auf folgende Weise montiert: Zunächst werden die Schraubrad-Planetenräder 26 in die Durchbrüche 24 eingebracht und so ausgerichtet, dass die Durchgangsbohrungen 30 mit den Sacklochbohrungen 22 fluchten (siehe Figur 1a). Anschließend werden die Planetenradachsen 28 in die Sacklochbohrungen 22 eingebracht, bis dass die zweite Anlagefläche 34₂ mit dem Grund der Sacklochbohrungen 22 in Berührung kommt. Beim Einbringen werden die Planetenradachsen 28 durch die Durchgangsbohrungen 30 der Schraubrad-Planetenräder 26 durchgeführt. Dieser Zustand ist in Figur 1b dargestellt. Nun wird das erste Fixiermittel 32 mit dem Planetenträger 10₁ verbunden. Dabei werden die Vorsprünge 38 des ersten Fixiermittels 32 in die zurückversetzten Abschnitte 18 der Stirnfläche 14 des Planetenträgers 10₁ eingebracht, wodurch das erste Fixiermittel 32 drehfest gegenüber dem Grundkörper 12 positioniert ist. Das erste Fixiermittel 32 wird am Grundkörper 12 verklebt oder verschweißt oder auf eine andere geeignete Weise am Grundkörper 12 befestigt. Die Lagerungsabschnitte 33, 35 sind so ausgestaltet, dass die Planetenradachsen 28 der Schraubrad-Planetenräder 26 windschief zur Planetenträgerachse AP verlaufen. Nachdem das erste Fixiermittel 32 am Grundkörper 12 befestigt ist, ist der Planetenträger 10₁ fertig montiert.

Wie insbesondere aus den Figuren 1b und 1c hervorgeht, verlaufen die erste Anlagefläche 34₁ und die Anlagegegenfläche 36 parallel zueinander, wenn das erste Fixiermittel 32 mit dem Grundkörper 12 befestigt ist. Hierdurch wird das Schraubrad-Planetenrad 26 axial gelagert. Im montierten Zustand kann der erste Achsenabschnitt 29 mit der ersten Anlagefläche 34₁ an der Anlagegegenfläche 36 des ersten Fixiermittels 32 zur Anlage kommen, während die zweite Anlagefläche 34₂ am Grund der Sacklochbohrung 22 anliegen kann. Um einen Verklemmen des Schraubrad-Planetenrads 26 beispielsweise infolge einer von einer Temperaturerhöhung verursachten Ausdehnung zu verhindern, wird ein gewisses Spiel vorgesehen. Entsprechend ist eine geringfügige Bewegbarkeit der Planetenräder entlang der Längsachse L der Planetenradachsen 28 möglich.

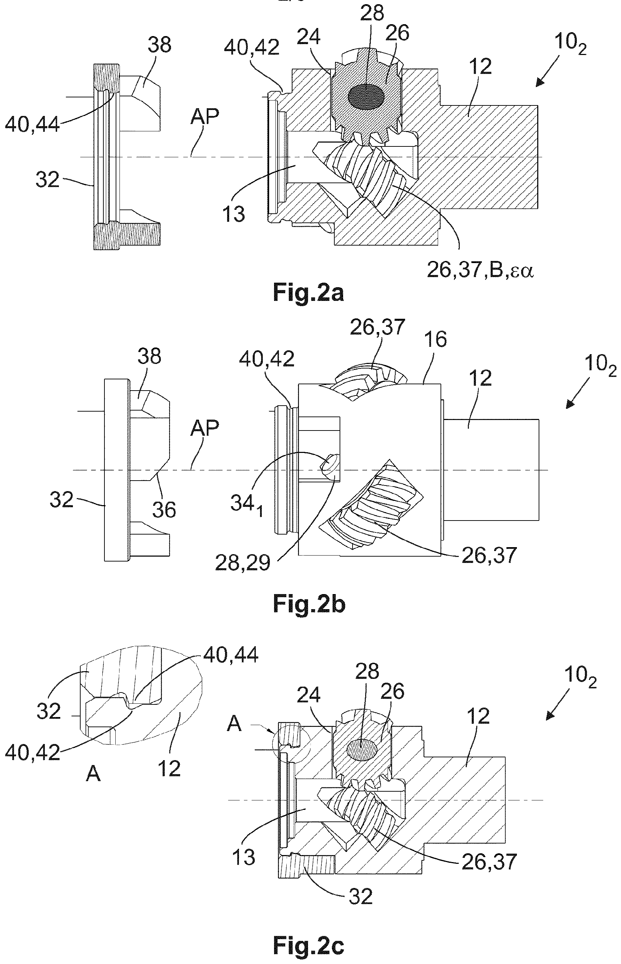

In den Figuren 2a bis 2c ist ein zweites Ausführungsbeispiel des erfindungsgemäßen Planetenträgers 10₂ in verschiedenen Montagezuständen gezeigt. Der Planetenträger 10₂ nach dem zweiten Ausführungsbeispiel gleicht weitgehend demjenigen gemäß dem ersten Ausführungsbeispiel, wobei der Grundkörper 12 und das erste Fixiermittel 32 eine erste Einrastkontur 40 aufweisen. Die erste Einrastkontur 40 umfasst eine auf dem Grundkörper 12 angeordnete und entlang der Planetenträgerachse AP gerichtete Hinterschneidung 42, in welche beim Einbringen des Vorsprungs 38 des ersten Fixiermittels 32 in den zurückversetzten Abschnitt 18 der Stirnfläche 14 eine zur ersten Einrastkontur 40 gehörende flexible Nase 44 des ersten Fixiermittels 32 eingreift. Wie insbesondere aus dem vergrößert dargestellten Ausschnitt A der Figur 2c hervorgeht, wird das erste Fixiermittel 32 mittels eines Formschlusses am Grundkörper 12 befestigt. Im zweiten Ausführungsbeispiel des Planetenträgers 10₂ muss das erste Fixiermittel 32 nicht mit dem Grundkörper 12 verklebt oder verschweißt werden, sondern es genügt, das erste Fixiermittel 32 mit dem Grundkörper 12 zu verpressen, wodurch die Verbindung zwischen dem Grundkörper 12 und dem ersten Fixiermittel 32 deutlich einfacher bereitgestellt werden kann.

In den Figuren 3a bis 3c ist ein drittes Ausführungsbeispiel des erfindungsgemäßen Planetenträgers 10₃ dargestellt, wobei in Figur 3a der Planetenträger 10₃ nur teilweise montiert ist, während der Planetenträger 10₃ in den Figuren 3b und 3c fertig montiert ist. Figuren 3a und 3b zeigen eine Draufsicht, während Figur 3c eine Vorderansicht zeigt. Auch in den Figuren 4a bis 4c ist der Planetenträger 10₃ gemäß dem dritten Ausführungsbeispiel anhand von perspektivischen Darstellungen in verschiedenen Montagezuständen gezeigt.

Der grundsätzliche Aufbau des Planetenträgers 10₃ nach dem dritten Ausführungsbeispiel entspricht demjenigen nach dem ersten und zweiten Ausführungsbeispiel, so dass sich die folgende Beschreibung im Wesentlichen auf die Unterschiede des dritten Ausführungsbeispiels zu den übrigen Ausführungsbeispielen beschränkt. Der erste Lagerungsabschnitt 33 und der zweite Lagerungsabschnitt 35 werden von rinnenförmigen Vertiefungen 46 gebildet, die von der äußeren Oberfläche 16 ausgehen, wie insbesondere aus den Figuren 4a und 4b ersichtlich. Die Vertiefungen 46 verlaufen windschief zur Planetenträgerachse AP. Die Vertiefungen 46 weisen eine erste Begrenzungsfläche 48₁ und eine zweite Begrenzungsfläche 48₂ auf. Die Begrenzungsflächen 48 gehen insbesondere aus der Figur 4a hervor.

Darüber hinaus weist der Grundkörper 12 eine Anzahl von Ausnehmungen 50 auf, die von der äußeren Oberfläche 16 ausgehen. Weiterhin umfasst der Planetenträger 10₃ neben dem ersten Fixiermittel 32 ein zweites Fixiermittel 52, welches baugleich zum ersten Fixiermittel 32 ausgestaltet ist. Insbesondere weist das zweite Fixiermittel 52 ebenfalls eine Einrastkontur 40 auf und bildet die Nase 44, welche in eine zweite Hinterschneidung 42 des Grundkörpers 12 einbringbar ist.

Zur Montage des Planetenträgers 10₁ wird zunächst die Planetenradachse 28 durch die Durchgangsbohrung 30 des Schraubrad-Planetenrads 26 geführt. Alternativ kann die Planetenradachse 28 integraler Bestandteil des Schraubrad-Planetenrads 26 sein, so dass das Schraubrad-Planetenrad 26 einteilig ausgeführt ist. Da in diesem Ausführungsbeispiel die Lagerungsabschnitte 33, 35 radial nach außen offen sind, kann das Schraubrad-Planetenrad 26 zusammen mit der Planetenradachse 28 in den Durchbruch 24 bzw. in die Lagerungsabschnitte 33, 35 eingebracht werden, so dass der erste Achsenabschnitt 29 im ersten Lagerungsabschnitt 33 und der zweite Achsenabschnitt 31 im zweiten Lagerungsabschnitt 33 zur Anlage kommen. Die Begrenzungsflächen 48₁, 48₂ können dabei mit den Anlageflächen 34 anschlagen, wodurch die axiale Bewegbarkeit der Schraubrad-Planetenräder 26 im Planetenträger 10₃ begrenzt wird.

Anschließend werden das erste Fixiermittel 32 und das zweite Fixiermittel 52 mit dem Grundkörper 12 verbunden, wobei die Vorsprünge 38 der Fixiermittel 32, 52 in die Ausnehmungen 50 des Grundkörpers 12 eingreifen, wodurch die Fixiermittel 32, 52 drehfest gegenüber dem Grundkörper 12 positioniert sind. Die axiale Festlegung der Fixiermittel 32, 52 erfolgt über die Einrastkonturen 40. Wie insbesondere aus den Figuren 3b und 4c hervorgeht, bilden die Vorsprünge 38 Beschränkungsflächen 54, welche fast bis an das Schraubrad-Planetenrad 26 heranreichen und an welche das Schraubrad-Planetenrad 26 zur Anlage kommen kann. Die Beschränkungsflächen 54 dienen ebenfalls der Begrenzung der axialen Bewegbarkeit der Schraubrad-Planetenräder 26 im Planetenträger 10₃. Nachdem das erste Fixiermittel 32 und das zweite Fixiermittel 52 am Grundkörper 12 befestigt sind, ist der Planetenträger 10₃ fertig moniert.

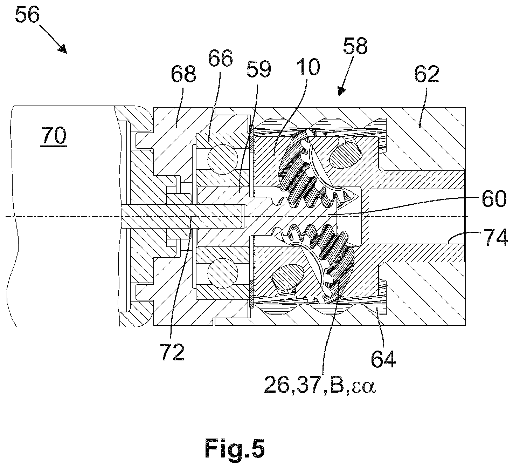

In Figur 5 ist eine Motor-Getriebeanordnung 56 anhand einer Teilschnittdarstellung gezeigt, welche ein Schraubrad-Planetengetriebe 58 mit einem der in den Figuren 1 bis 4 dargestellten Planetenträger 10 umfasst. Zudem umfasst das Schraubrad-Planetengetriebe 58 eine Schraubradwelle 59, welche eine Schraubradverzahnung 60 aufweist, die mit der Planetenradverzahnung 37 in Eingriff steht. Weiterhin umfasst das Schraubrad-Planetengetriebe 58 ein Innenschraubrad 62 mit einer Innenverzahnung 64, die in die Planetenradverzahnung 37 eingreift. Die Schraubradwelle 59 ist mit einem Kugellager 66 axial und radial gelagert, wobei das Kugellager 66 in einer Lageraufnahme 68 angeordnet ist.

Ferner umfasst die Motor-Getriebeanordnung 56 einen Elektromotor 70 mit einer Motorwelle 72, welche aus dem Elektromotor 70 herausragt. Die Motorwelle 72 greift drehfest in die Schraubradwelle 59 ein. Die Lageraufnahme 68 ist drehfest am Elektromotor 70 befestigt. Zudem ist das Innenschraubrad 62 drehfest mit der Lageraufnahme 68 verbunden. Dadurch, dass das Innenschraubrad 62 drehfest an der Lageraufnahme 68 und indirekt drehfest am Elektromotor 70 befestigt ist, wird die Drehung der Motorwelle 72 in eine Drehung des Planetenträgers 10 umgesetzt. Der Planetenträger 10 weist eine Mitnahme 74 auf, mit welcher eine nicht dargestellte Abtriebswelle drehfest verbunden werden kann.

### Bezugszeichenliste

- 10, 10₁- 10₃: Planetenträger
- 12: Grundkörper
- 14: Stirnfläche
- 16: äußere Oberfläche
- 18: zurückversetzter Abschnitt

- 20: Bohrung
- 22: Sacklochbohrung
- 24: Durchbruch
- 26: Schraubrad-Planetenrad
- 28: Planetenradachse
- 29: erster Achsenabschnitt

- 30: Durchgangsbohrung
- 31: zweiter Achsenabschnitt
- 32: erstes Fixiermittel
- 33: erster Lagerungsabschnitt
- 34, 34₁, 34₂: Anlagefläche
- 35: zweiter Lagerungsabschnitt
- 36: Anlagegegenfläche
- 37: Planetenradverzahnung
- 38: Vorsprung

- 40: Einrastkontur
- 42: Hinterschneidung
- 44: Nase
- 46: Vertiefung
- 48, 48₁, 48₂: Begrenzungsfläche

- 50: Ausnehmung
- 52: zweites Fixiermittel
- 54: Beschränkungsfläche
- 56: Motor-Getriebeanordnung
- 58: Schraubrad-Planetengetriebe
- 59: Schraubradwelle

- 60: Schraubradverzahnung
- 62: Innenschraubrad
- 64: Innenverzahnung
- 66: Kugellager
- 68: Lageraufnahme

- 70: Elektromotor
- 72: Motorwelle
- 74: Mitnahme

- AP: Planetenträgerachse
- B: Balligkeit
- L: Längsachse

- εα: Profilüberdeckung

## Patentansprüche

1. Planetenträger (10) zum Lagern zumindest eines Schraubrad-Planetenrads (26) in einem Schraubrad-Planetengetriebe für eine Verstelleinrichtung zum Verstellen zweier zueinander verstellbarer Bauteile, wobei
- das Schraubrad-Planetenrad (26) eine Planetenradachse (28) aufweist, welche einen über das Schraubrad-Planetenrad (26) überstehenden ersten Achsenabschnitt (29) und einen über das Schraubrad-Planetenrad (26) überstehenden zweiten Achsenabschnitt (31) umfasst, und
der Planetenträger (10) aufweist
- einen rohrförmigen Grundkörper (12), der eine Planetenträgerachse (AP) definiert,
- zumindest einen im Grundkörper (12) angeordneten und diesen durchdringenden Durchbruch (24),
- einen vom Durchbruch (24) ausgehenden ersten Lagerungsabschnitt (33),
- einen vom Durchbruch (24) ausgehenden zweiten Lagerungsabschnitt (35), wobei
- der erste und der zweite Lagerungsabschnitt (33, 35) zur drehbaren Aufnahme des ersten und des zweiten Achsenabschnitts (29, 31) ausgebildet und so angeordnet sind, dass die Planetenradachse (28) windschief zu der Planetenträgerachse (AP) verläuft, wenn die Achsenabschnitte (29, 31) in den Lagerungsabschnitten (33, 35) aufgenommen sind, und
- der Planetenträger (10) ein mit dem Grundkörper (12) verbundenes erstes Fixiermittel (32) zum Fixieren des ersten Achsenabschnitts (29) im Grundkörper (12) umfasst.

2. Planetenträger (10) nach Anspruch 1,
**dadurch gekennzeichnet, dass** der Planetenträger (10) ein mit dem Grundkörper (12) verbundenes zweites Fixiermittel (52) zum Fixieren des zweiten Achsenabschnitts (31) im Grundkörper (12) umfasst.

3. Planetenträger (10) nach einem der Ansprüche 1 oder 2,
**dadurch gekennzeichnet, dass** der Grundkörper (12) eine äußere Oberfläche (16) aufweist und der erste Lagerungsabschnitt (33) und/oder der zweite Lagerungsabschnitt (35) als eine von der äußeren Oberfläche (16) ausgehende rinnenförmige Vertiefung (46) ausgebildet sind.

4. Planetenträger (10) nach Anspruch 3,
**dadurch gekennzeichnet, dass** die rinnenförmige Vertiefung (46) eine Begrenzungsfläche (48) zum Begrenzen der axialen Bewegbarkeit des Planetenrads (10) aufweist.

5. Planetenträger (10) nach einem der Ansprüche 3 oder 4,
**dadurch gekennzeichnet, dass** das erste Fixiermittel (32) und/oder das zweite Fixiermittel (52) jeweils zumindest einen Vorsprung (38) aufweisen, der die rinnenförmige Vertiefung (46) zumindest teilweise überdeckt.

6. Planetenträger (10) nach Anspruch 5,
**dadurch gekennzeichnet, dass** der Vorsprung (38) eine Beschränkungsfläche (54) zum Begrenzen der axialen Bewegbarkeit des Planetenrads (10) bildet.

7. Planetenträger (10) nach einem der Ansprüche 5 oder 6,
**dadurch gekennzeichnet, dass** der Grundkörper (12) zumindest eine Ausnehmung (50) aufweist, in welche der Vorsprung (38) zumindest teilweise eingreift.

8. Planetenträger (10) nach Anspruch 1,
**dadurch gekennzeichnet, dass** der Grundkörper (12) eine Stirnfläche (14) aufweist und erste Lagerungsabschnitt (33) und/oder der zweite Lagerungsabschnitt (35) von einer von der ersten Stirnfläche (14) ausgehenden Bohrung gebildet wird.

9. Planetenträger (10) nach Anspruch 8,
**dadurch gekennzeichnet, dass** die Stirnfläche (14) einen zurückversetzten Abschnitt (18) aufweist, von dem die Bohrung ausgeht und das erste Fixiermittel (32) einen Vorsprung (38) aufweist, der in den zurückversetzten Abschnitt (18) eingreift.

10. Planetenträger (10) nach einem der Ansprüche 8 oder 9,
**dadurch gekennzeichnet, dass** der erste Achsenabschnitt (29) eine Anlagefläche (34) und das erste Fixiermittel (32) eine Anlagegegenfläche (36) bilden, welche zumindest abschnittsweise korrespondierend zueinander verlaufen.

11. Planetenträger (10) nach einem der vorherigen Ansprüche,
**dadurch gekennzeichnet, dass** der Grundkörper (12) und das erste Fixiermittel (32) eine Einrastkontur (40) zum formschlüssigen Verbinden des ersten Fixiermittels (32) am Grundkörper (12) aufweisen.

12. Planetenträger (10) nach einem der vorherigen Ansprüche,
**dadurch gekennzeichnet, dass** der Planetenträger (10) aus Kunststoff besteht und spritzgegossen ist.

13. Schraubrad-Planetengetriebe für eine Verstelleinrichtung zum Verstellen zweier zueinander verstellbarer Bauteile, umfassend
- einen Planetenträger (10) nach einem der vorherigen Ansprüche,
- eine Schraubradwelle (59), welche um die Planetenträgerachse (AP) drehbar gelagert ist und eine Schraubradverzahnung (60) aufweist, die mit der Planetenradverzahnung (37) in Eingriff steht, und
- ein Innenschraubrad (62) mit einer Innenverzahnung (64), welche mit der Planetenradverzahnung (37) in Eingriff steht.

14. Motor-Getriebeanordnung insbesondere für eine Verstelleinrichtung zum Verstellen zweier zueinander verstellbarer Bauteile , umfassend
- einen Elektromotor (54) und
- ein Schraubrad-Planetengetriebe (40) nach Anspruch 13, wobei
- der Elektromotor (54) eine Motorwelle (56) aufweist, welche drehfest mit der Schraubradwelle (59) verbunden ist.

15. Motor-Getriebeanordnung nach Anspruch 14,
**dadurch gekennzeichnet, dass** das Innenschraubrad (62) drehfest mit dem Elektromotor (54) verbunden ist.

## Claims

1. Planetary carrier (10) for mounting at least one helical planet wheel (26) in a helical planetary gear mechanism for an adjustment device for adjusting two components which are adjustable relative to each other, wherein
- the helical planet wheel (26) has a planet wheel axle (28) which comprises a first axle portion (29) extending beyond the helical planet wheel (26) and a second axle portion (31) extending beyond the helical planet wheel (26), and
the planetary carrier comprises
- a tubular base body (12) which defines a planetary carrier axis (AP),
- at least one opening (24) arranged in and passing through the base body (12),
- a first bearing portion (33) starting from the opening (24),
- a second bearing portion (35) starting from the opening (24), wherein
- the first and second bearing portions (33, 35) are configured for rotatably receiving the first and second axle portions (29, 31) and are arranged such that the planet wheel axle (28) runs obliquely relative to the planetary carrier axis (AP) when the axle portions (29, 31) are received in the bearing portions (33, 35), and
- the planetary carrier (10) comprises a first fixing means (32) connected to the base body (12) for fixing the first axle portion (29) in the base body (12).

2. Planetary carrier (10) according to claim 1, **characterised in that** the planetary carrier (10) has a second fixing means (52) connected to the base body (12) for fixing the second axle portion (31) in the base body (12).

3. Planetary carrier according to one of claims 1 or 2, **characterised in that** the base body (12) has an outer surface (16) and the first bearing portion (33) and/or the second bearing portion (35) are formed as a channel-like depression (46) starting from the outer surface (16).

4. Planetary carrier (10) according to claim 3, **characterised in that** the channel-like depression (46) has a boundary face (48) for limiting the axial movability of the planet wheel (10).

5. Planetary carrier (10) according to one of claims 3 or 4, **characterised in that** the first fixing means (32) and/or the second fixing means (52) each have at least one protrusion (38) which at least partially covers the channel-like depression (46).

6. Planetary carrier (10) according to claim 5, **characterised in that** the protrusion (38) has a restricting face (54) for limiting the axial movability of the planet wheel (10).

7. Planetary carrier (10) according to one of claims 5 or 6, **characterised in that** the base body (12) has at least one recess (50) in which the protrusion (38) at least partially engages.

8. Planetary carrier (10) according to claim 1, **characterised in that** the base body (12) has an end face (14) and the first bearing portion (33) and/or the second bearing portion (35) is formed by a bore starting from the first end face (14).

9. Planetary carrier (10) according to claim 8, **characterised in that** the end face (14) has a set-back portion (18) from which the bore begins, and the first fixing means (32) has a protrusion (38) which engages in the set-back portion (18).

10. Planetary carrier (10) according to one of claims 8 or 9, **characterised in that** the first axle portion (29) forms a contact face (34) and the first fixing means (32) forms a counter-contact face (36) which run correspondingly to each other at least in portions.

11. Planetary carrier (10) according to any of the preceding claims, **characterised in that** the base body (12) and the first fixing means (32) have a latching contour (40) for form-fit connection of the first fixing means (32) to the base body (12).

12. Planetary carrier (10) according to any of the preceding claims, **characterised in that** the planetary carrier (10) is made of plastic and is injection-moulded.

13. Helical planetary gear mechanism for an adjustment device for adjusting two components which are adjustable relative to each other, comprising
- a planetary carrier (10) according to any of the preceding claims,
- a helical gear shaft (59) which is mounted so as to be rotatable about the planetary carrier axis (AP) and has a helical gear toothing (60) which is in engagement with the planetary gear toothing (37), and
- and internal helical gear (62) with an internal toothing (64) which is in engagement with the planetary gear toothing (37).

14. Motor gear mechanism arrangement, in particular for an adjustment device for adjusting two components which are adjustable relative to each other, comprising
- an electric motor (54), and
- a helical planetary gear mechanism (40) according to claim 13, wherein
- the electric motor (54) has a motor shaft (56) which is connected rotationally fixedly to the helical gear shaft (59).

15. Motor gear mechanism according to claim 14, **characterised in that** the internal helical gear (62) is connected rotationally fixedly to the electric motor (54).

## Revendications

1. Porte-satellites (10) destiné au montage d'au moins une roue planétaire hélicoïdale (26) dans un engrenage planétaire à roue hélicoïdale pour un dispositif de réglage permettant de régler deux composants réglables l'un par rapport à l'autre, dans lequel :
- la roue planétaire hélicoïdale (26) a un axe (28) qui comporte un premier segment d'axe (29) dépassant de cette roue planétaire hélicoïdale (26) et un second segment d'axe (31) dépassant de cette roue planétaire hélicoïdale (26), et
le porte-satellites (10) comprend :
- un corps de base tubulaire (12) qui définit l'axe (AP) du porte satellites,
- au moins un perçage (24) situé dans le corps de base (12) et traversant celui-ci,
- un premier segment de palier (33) sortant du perçage (24),
- un second segment de palier (35) sortant du perçage (24),
- le premier segment de palier et le second segment de palier (33, 35) étant réalisés et installés pour recevoir en rotation le premier segment d'axe et le second segment d'axe (29, 31) de sorte que l'axe (28) de la roue planétaire soit incliné vers l'axe (AP) du porte-satellites lorsque les segments d'axe (29, 31) sont logés dans les segments de palier (33, 35), et
- le porte-satellites (10) comporte un premier moyen de fixation (32) relié au corps de base (12) pour permettre de fixer le premier segment d'axe (29) dans le corps de base (12).

2. Porte-satellites (10) conforme à la revendications 1,
**caractérisé en ce qu'**
il comporte un second moyen de fixation (52) relié au corps de base (12) pour permettre de fixer le second segment d'axe (31) dans le corps de base (12).

3. Porte-satellites (10) conforme à l'une des revendications 1 et 2,
**caractérisé en ce que**
le corps de base (12) a une surface externe (16) et le premier segment de palier (33) et/ou le second segment de palier (35) est(sont) réalisé(s) sous la forme d'un renfoncement en forme d'auge (46) partant de la surface externe (16).

4. Porte-satellites (10) conforme à la revendication 3,
**caractérisé en ce que**
le renfoncement en forme d'auge (46) a une surface de limitation (48) permettant de limiter la mobilité axiale du porte-satellites (10).

5. Porte-satellites (10) conforme à l'une des revendications 3 et 4,
**caractérisé en ce que** le premier moyen de fixation (32) et/ou le second moyen de fixation (52) comporte(nt) respectivement au moins une saillie (38) qui recouvre au moins partiellement le renfoncement en forme d'auge (46).

6. Porte-satellites (10) conforme à la revendication 5,
**caractérisé en ce que**
la saillie (38) forme une surface de limitation (54) permettant de limiter la mobilité axiale du porte-satellites (10).

7. Porte-satellites (10) conforme à l'une des revendications 5 et 6,
**caractérisé en ce que** le corps de base (12) comporte au moins un évidement (50) dans lequel vient en prise au moins partiellement la saillie (38).

8. Porte-satellites (10) conforme à la revendication 1,
**caractérisé en ce que**
le corps de base (12) a une surface frontale (14) et le premier segment de palier (33) et/ou le second segment de palier (35) est(sont) formé(s) par un perçage partant de la première surface frontale (14).

9. Porte-satellites (10) conforme à la revendication 8,
**caractérisé en ce que**
la surface frontale (14) comprend un segment en retrait (18) d'où part le perçage et le premier moyen de fixation (32) comporte une saillie (38) qui vient en prise dans le segment en retrait (18).

10. Porte-satellites (10) conforme à l'une des revendications 8 et 9,
**caractérisé en ce que**
le premier segment d'axe (29) forme une surface d'appui (34) et le premier moyen de fixation (32) forme une surface d'appui antagoniste (36) ces surfaces s'étendant au moins par segments en correspondance.

11. Porte-satellites (10) conforme à l'une des revendications précédentes,
**caractérisé en ce que**
le corps de base (12) et le premier moyen de fixation (32) ont un contour d'encliquetage (40) permettant une liaison par la forme du premier moyen de fixation (32) sur le corps de base (12).

12. Porte-satellites (10) conforme à l'une des revendications précédentes,
**caractérisé en ce qu'**
il est réalisé en un matériau synthétique et est moulé par injection.

13. Engrenage planétaire à roue hélicoïdale destiné à un dispositif de réglage permettant de régler deux composants réglables l'un par rapport à l'autre comprenant :
- un porte-satellites (10) conforme à l'une des revendications précédentes,
- un arbre de roue hélicoïdale (59) qui est monté mobile en rotation autour le l'axe (AP) du porte-satellites et comporte une denture de roue hélicoïdale (60) qui engrène avec la denture (37) de la roue planétaire,
- une roue hélicoïdale interne (62) ayant une denture interne (64) qui engrène avec la denture (37) de la roue planétaire.

14. Dispositif d'engrenage motorisé destiné en particulier à un dispositif de réglage permettant de régler deux composants réglables l'un par rapport à l'autre, comprenant :
- un moteur électrique (54), et
- un engrenage planétaire à roue hélicoïdale (40) conforme à la revendication 13,
- le moteur électrique (54) ayant un arbre (56) qui est relié solidairement en rotation avec l'arbre de la roue hélicoïdale (59).

15. Dispositif d'engrenage motorisé conforme à la revendication 14,
**caractérisé en ce que**
la roue hélicoïdale interne (62) est reliée solidairement en rotation au moteur électrique (54).
